# FASCICULE DE BREVET EUROPEEN

(11) **EP 0 329 540 B1**
(45) Date de publication et mention de la délivrance du brevet: **12.01.1994**
(21) Numéro de dépôt: 89400396.1
(22) Date de dépôt: 13.02.1989
(51) Int. Cl.: G01S 17/02

(54) **Système de repérage et de mesure par voie optique pour véhicule spatial**
Optisches Standortbestimmungs- und -messsystem für Raumfahrzeuge
Optical position-measuring system for a space vehicle

(30) Priorité: 12.02.1988 FR 8801720
(43) Date de publication de la demande: 23.08.1989
(73) Titulaire: MATRA MARCONI SPACE FRANCE, 75116 Paris (FR)
(72) Inventeur: Flamenbaum, Serge, F-75015 Paris (FR); Tulet, Michel, F-78530 Buc (FR)
(74) Mandataire: Fort, Jacques

(56) Documents cités:
- EP-A- 0 192 552
- EP-A- 0 254 634
- DE-A- 3 325 483
- FR-A- 2 570 195
- GB-A- 2 071 957
- OPTICAL ENGINEERING, vol. 20, no. 6, novembre-décembre 1981, pages 976-980, Bellingham, Washington, US; R.C. HARNEY: "Dual active/passive infrared imaging systems"
- PROCEEDINGS OF THE IEEE, 1986 NATIONAL AEROSPACE AND ELECTRONICS CONFERENCE NAECON, Piscataway, 19-23 mai 1986, vol. 2, pages 550-559, IEEE, New York, US; R.A. HALE et al.: "AFTI/F-16 sensor/tracker system"
- N.T.I.S. TECHNICAL NOTES, no. 9, septembre 1986, page 1006, Springfield, VA, US; "NASA Tech Brief: Laser ranging system"

## Description

L'invention a pour objet un système de repérage et de mesure par voie optique pour véhicule spatial.

On connaît déjà un système de repérage et de mesure par voie optique pour véhicule spatial comprenant un dispositif de mesure de distance ayant, d'une part, une tête opto-électronique comportant une source d'impulsions lumineuses sensiblement monochromatiques et un détecteur à optique de formation d'image et matrice de capteurs électro-optique associée à des moyens de lecture à fréquence déterminée vers une sortie et, d'autre part, un boîtier électronique contenant des moyens de traitement des signaux analogiques fournis par la tête et des circuits numériques de déclenchement périodique de la source et de fourniture de signaux de synchronisation à la tête.

Un tel wystème trouve notamment une application dans la mesure de la distance et de la position d'une "cible" portant des rétroréflecteurs disposés suivant une configuration reconnaissable par rapport à un "chasseur" qui porte le système, pour permettre le rendez-vous et l'accostage de deux véhicules spatiaux, opération qui implique tout d'abord de mesurer la distance de la cible et sa position par rapport au chasseur à grande distance, puis l'attitude de la cible pour des distances beaucoup plus courtes. Un système particulièrement avantageux de ce type est décrit dans le document EP-A-O 254 634.

On connaît par ailleurs des dispositifs de détection et de localisation de sources de lumière utilisables sur véhicule spatial et notamment des détecteurs de position du soleil ou d'horizon terrestre et des détecteurs de repérage de sources ponctuelles de très faible intensité, telles que les étoiles, permettant de déterminer l'attitude d'un véhicule qui porte le dispositif par rapport à des constellations. La demande de brevet EP-A-192 552 décrit un dispositif de ce dernier type comportant une optique de formation d'image et une matrice de capteurs électro-optiques placée dans le plan image et associée à une électronique de traitement.

Jusqu'à présent on a réalisé de façon indépendante le dispositif de détection et de localisation et le dispositif de mesure de distance sur les véhicules spatiaux qui doivent être munis de l'un et de l'autre. La présente invention se fonde sur la constatation que, lorsque les deux dispositifs utilisent l'un et l'autre une matrice de capteurs électro-optiques à état solide, la plupart des fonctions remplies par les boîtiers électroniques sont très similaires et sur la constatation supplémentaire que les têtes optiques ne sont pas utilisées simultanément au cours d'une mission.

L'invention utilise ces constatations pour réaliser un gain d'investissement et de poids en évitant les duplications de parties électroniques. Elle propose dans ce but un système du type ci-dessus défini qui comporte, de plus, au moins une tête passive de détection à matrice bidimensionnelle de capteurs électro-optiques, de constitution différente de celle de la première, et des moyens de commutation permettant de relier alternativement et à volonté la partie du boîtier électronique assurant des fonctions communes ou similaires sur une tête et sur l'autre et de mettre simultanément en service et hors service des circuits assurant les fonctions spécifiques à l'une ou l'autre des têtes.

L'invention trouve un intérêt tout particulier dans le cas où la seconde tête est destinée à détecter la position dans un champ à deux dimensions car on est conduit dans ce cas à utiliser une matrice de capteurs de constitution très similaire (et souvent identique) à celle qui est utilisée pour la mesure de distance, et en ce que -exception faite des moyens de commande de la source requis par le dispositif de mesure de distance-l'essentiel des composants et même du logiciel requis pour la mise en oeuvre des deux têtes est le même.

Cependant, l'invention est applicable à de nombreux autres cas, y compris dans celui où les têtes remplissant différentes fonctions comportent des éléments communs et, par exemple, où une tête est utilisée alternativement en tant que dispositif de mesure de distance et en tant que dispositif de repérage, par mise en service ou hors service de certains composants de la tête et modification de la séquence de fonctionnement et de traitement du signal de sortie du détecteur.

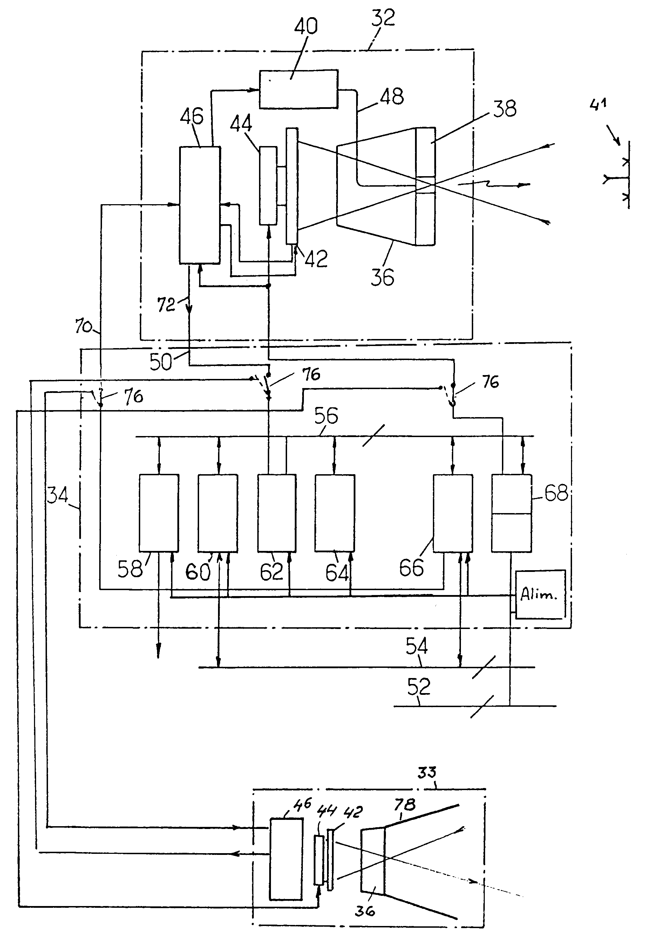

L'invention sera mieux comprise à la lecture de la description qui suit d'un mode particulier de réalisation donné à titre d'exemple non limitatif. La description se réfère à la Figure unique qui l'accompagne et qui est un schéma d'ensemble montrant les différents constituants d'un système ayant un dispositif de mesure de distance et un dispositif de détection d'étoile utilisant, l'un et l'autre, une matrice de capteurs électro-optiques du type à couplage de charge, ou CCD.

Le système dont la constitution de principe est donnée sur la Figure comprend unt tête opto-électronique 32 de mesure de distance, une tête opto-électronique 33 de détection et de localisation de sources ponctuelles de lumière, telles que des étoiles, et un boîtier électronique 34.

La tête 32 comporte un objectif 36 muni d'un filtre optique d'entrée 38 dont la bande passante correspond à la raie d'émission d'une diode laser 40 constituant source impulsionnelle. Dans le cas où le dispositif de mesure de distance est prévu pour permettre le rendez-vous et l'accostage de deux véhicules spatiaux, l'optique 36 a habituellement un champ angulaire supérieur à 10° et elle est très fermée. La diode laser 40 permet d'illuminer une cible portant un jeu de rétroréflecteurs 41 disposés suivant une configuration déterminée et reconnaissable. La tête opto-électronique 32 contient également un détecteur constitué par une matrice à deux dimensions de capteurs à état solide (détecteurs CCD en général) muni d'un refroidisseur Peltier 44.

La tête opto-électronique 32 contient une carte électronique 46 remplissant plusieurs rôles. D'une part, elle contient des composants analogiques de préamplification du signal vidéo provenant du détecteur CCD 42 et des circuits de filtrage de l'alimentation électrique du détecteur ; d'autre part, elle constitue interface de transfert de signaux numériques et logiques, permettant d'adapter et de transmettre les signaux d'horloge nécessaires au fonctionnement du détecteur. Lorsque celui-ci fonctionne suivant le mode décrit dans le document EP-A-O 254 634, les signaux logiques d'horloge nécessaires sont élaborés par l'interface à partir de deux signaux d'horloge définissant les décalages entre étapes de commande du détecteur 42, un signal d'horloge de référence et de synchronisation et un signal de commande de la durée d'exposition du détecteur 42. Les duex premiers signaux commandent le transfert de trame et un registre de lecture. Ils sont synchronisés à partir de la fréquence d'horloge de référence.

Cette configuration permet de réduire le nombre de fils de connexion entre la tête optique 32 (ou la tête 33) et le boîtier électronique 34.

Dans le mode de réalisation illustré, les impulsions lumineuses provenant de la diode laser 40 sont transmises jusqu'à l'axe de l'optique 36 par une fibre optique 48. Cette disposition n'est pas indispensable. La diode laser peut être placée à proximité de l'optique. Elle peut même être contenue dans le boîtier 34, la transmission de lumière s'effectuant vers la tête 32 par une fibre optique.

Le boîter électronique 34 est relié au bus de puissance 52 et au bus de données et d'adresses 54 du véhicule spatial qui porte le système ; il est relié à la tête opto-électronique 32 par un bus 70 de transfert des signaux logiques, d'une part, par des lignes 72 de transfert des signaux vidéo, d'autre part, par une ligne 74 d'alimentation en énergie électrique.

Des moyens de commutation, représentés sur la Figure par des commutateurs 76, permettent de relier les lignes 70, 72, 74 soit à la tête 32, soit à la tête 33. Cette dernière a une constitution très similaire à celle de la tête 32 et les éléments correspondants sont désignés par le même numéro de référence. Cependant, l'optique 36 sera généralement démunie de filtre mais, par contre, muni d'un parasoleil d'entrée 78 réduisant la lumière parasite. L'optique 36 de la tête opto-électronique 33 aura généralement une distance focale plus grande que l'optique de la tête 32 ; son ouverture et son champ angulaire seront plus élevés. Fréquemment, le grandissement de l'optique et le pas du détecteur sont tels que l'image d'une étoile se forme sur le détecteur 42 sous forme d'une tache ayant une dimension d'environ 2 pixels, ce qui conduira à prévoir un traitement incluant une recherche de barycentre.

L'unité électronique 34 comporte un bus interne 56 auquel sont reliés des circuits permettant d'assurer des fonctions dont beaucoup sont entièrement identiques pour les deux têtes, dont d'autres sont similaires et peuvent être remplies moyennant simplement une programmation différente, et dont quelques-unes sont particulières à la tête 32 ou à la tête 33.

Les fonctions identiques sont :
- le traitement analogique du signal vidéo provenant de la tête optique 32 ou 33,
- le traitement numérique du signal après numérisation,
- les commandes et calculs,
- l'alimentation des différents circuits de la tête optique 32 ou 33 et du boîtier électronique 34,
- la commande et l'alimentation du refroidisseur à effet Peltier 44 de la tête 32 ou 33.

Les fonctions similaires comportent le séquencement du détecteur à CCD 42, qui diffèrent pour la tête 32, où le détecteur est exploité par le procédé défini dans le document EP-A-O 254 634 déjà mentionné ou par l'une des procédures antérieures également rappelées dans ce document, pouvant nécessiter des organes mécaniques supplémentaires, et pour la tête 33.

Enfin, une fonction particulière requise par la tête 32 est la commande et l'alimentation de la diode laser 40, tandis que la recherche de barycentre de tache lumineuse est particulière à la tête 33.

La constitution générale du boîtier électronique 34 peut notamment être celle montrée sur la Figure et comporte, raccordés au bus interne 56 :
- une mémoire d'image 58, munie d'une sortie raccordée à un émetteur-récepteur de télémesure assurant des liaisons avec le sol,
- un processeur de traitement 60,
- une chaîne 62 de traitement analogique du signal vidéo et de conversion analogique/numérique,
- une chaîne 64 de traitement en temps réel,
- un séquenceur 66 fournissant des signaux d'horloge à l'interface 46,
- un circuit de puissance 68 contenant un convertisseur continu/continu, alimentant la ligne 74 et assurant également la régulation de température par commande du circuit 44, qui ne sera pas décrit davantage.

Le rôle du séquenceur 66 est de mettre en oeuvre le détecteur 42. Le séquenceur peut avoir la constitution donnée dans le document EP-A-O 254 634 pour ce qui est de la tête 32. Le séquenceur comporte alors des moyens permettant de modifier sa programmation, par exemple par commutation de mémoires, lors de la commutation des moyens 76. Lorsque c'est la tête 32 qui est mise en oeuvre par le procédé décrit dans le document EP-A-O 254 634, la programmation du séquenceur doit permettre de réduire à zéro la durée d'intégration de l'émission lumineuse sur le détecteur 42. Par contre, pour le fonctionnement de la tête 33, une fonction particulière de mesure du temps écoulé entre la durée d'intégration et l'horloge de référence externe est à prévoir.

On peut, dans la pratique, prévoir une durée d'intégration comprise entre 1 ms et 3,5 s dans le cas de la tête 33, pour la visée d'étoiles, et un temps d'intégration nul pour le fonctionnement de la tête 32.

Le processeur analogique 42 est destiné à numériser le signal analogique de niveau de brillance pour chaque pixel. Il peut comporter des convertisseurs analogique/numérique donnant une résolution de huit bits sans limitation de vitesse pour la lecture du dispositif 42 et il reste inchangé quelle que soit la tête utilisée.

Le processeur en temps réel 64 remplit des fonctions différentes suivant l'application et peut être dédoublé en deux composants utilisés alternativement. Toutefois, étant donné que la constitution du processeur, à base de comparateurs numériques et de mémoires vives, est très similaire dans les deux cas, il est plus avantageux d'utiliser un même processeur avec des mémoires de programme commutables. Une fonction commune est l'acquisition du niveau de signal des pixels pour n'importe quelle portion de l'image fournie par le détecteur 42. Mais :
- dans le cas d'utilisation de la tête 32, la fonction de traitement numérique doit permettre de localiser les rétroréflecteurs 41 de la cible ; cette localisation est effectuée par comparaison entre les niveaux des signaux de sortie pour chaque pixel avec un seuil programmable. Une fonction spécifique isole le maximum relatif dans un groupe de pixels appartenant à une même ligne ;
- dans le cas d'utilisation de la tête 33, la fonction de traitement numérique doit permettre de localiser les étoiles n'importe où dans l'image, par exemple par le processus décrit dans la demande de brevet EP-A-192 552.

Le processeur de traitement 60, utilisé en alternance avec la tête 32 et la tête 33, constitue l'unité centrale du boîtier 34. Il pourra comporter, de façon classique, un microprocesseur (par exemple un microprocesseur HARRIS 80C86 à mots de seize bits fonctionnant à 5 MHz) associé à une horloge, un contrôleur d'interruption programmable, et des registres-tampons d'entrée/sortie de liaison avec le bus de données et d'adresses 54 du véhicule.

La mémoire d'image 58, utilisée quelle que soit la tête mise en oeuvre, comporte en général une mémoire morte programmable à faible consommation et une mémoire vive de travail de capacité proportionnée au nombre de pixels de l'image.

La fonction d'illumination peut être incorporée au séquenceur 66 et mise hors d'action lors de l'utilisation de la tête 33.

## Revendications

1. Système de repérage et de mesure par voie optique pour véhicule spatial comprenant un dispositif de mesure de distance ayant, d'une part, une tête opto-électronique (32) comportant une source (40) d'impulsions lumineuses sensiblement monochromatiques et un détecteur à optique (36) de formation d'image et matrice de capteurs électro-optiques (42) associée à des moyens de lecture à fréquence déterminée vers une sortie et, d'autre part, un boîtier électronique (34) contenant des moyens de traitement des signaux analogiques fournis par la tête et des circuits de fourniture de signaux logiques de déclenchement périodique de la source et de fourniture de signaux de synchronisation à la tête, **caractérisé en ce qu**'il comporte, de plus, au moins une autre tête (33) de détection à matrice bidimensionnelle de capteurs électro-optiques, de constitution différente de celle de la première, **et en ce que** le boîtier comporte des moyens de commutation (76) permettant de relier alternativement et à volonté la partie du boîtier électronique assurant des fonctions identiques ou similaires sur une têtes (32) et sur l'autre (33) à l'une ou l'autre des têtes et de mettre simultanément en service et hors service des circuits assurant les fonctions spécifiques à l'une ou l'autre des têtes.

2. Système selon la revendication 1, caractérisé en ce que la seconde tête est passive.

3. Système selon la revendication 1 ou 2, caractérisé en ce que les deux têtes comportent des éléments communs.

4. Système selon la revendication 1, 2 ou 3, caractérisé en ce que chaque tête comprend une carte électronique propre de préamplification du signal vidéo fourni par le détecteur de la tête et d'adaptation et de mise en forme des signaux d'horloge destinés au détecteur.

5. Système selon l'une quelconque des revendications 1 à 4, caractérisé en ce que le boîtier contient des moyens directement commutables d'une tête sur l'autre assurant le traitement analogique du signal vidéo provenant de la tête optique (32) ou (33), le traitement numérique du signal après numérisation, les commandes et calculs, l'alimentation des différents circuits de la tête optique (32) ou (33) et la commande et l'alimentation d'un refroidisseur équipant chaque détecteur.

## Claims

1. Optical detection and measurement system for a space vehicle, comprising a range measurement device having, on the one hand, an opto-electronic head (32) comprising a source (40) of substantially monochromatic light pulses and a detector having image generating optical means (36) and a matrix of electro-optical sensors (42) associated to means for read out at a predetermined frequency toward an output and, on the other hand, an electronic unit (34) which contains means for processing analog signals delivered by the head and circuits for delivering logical signals for periodically triggering the source and delivering synchronization signals to the head,
**characterized in that** it further comprises at least another detection head (33) having a bi-dimensional matrix of electro-optical sensors, whose construction is different from that of the first head, and in that the unit comprises switching means (76) for alternatively and at will connecting that part of the electronic unit which carries out identical or similar functions on one head (32) and the other head (33) to one head or the other, and to simultaneously enabling and desabling circuits which carry out functions which are specific to one or the other of the heads.

2. System according to claim 1, characterized in that the second head is passive.

3. System according to claim 1 or 2, characterized in that the two heads have common elements.

4. System according to claim 1, 2 or 3, characterized in that each head comprises a specific electronic board for preamplifying the video signal delivered by the detector of the head and for adapting and shaping clock signals for the detector.

5. System according to any one of claims 1-4, characterized in that the unit contains means which are directly switchable from one head to the other for analog processing of the video signal originating from the optical head (32) or (33), the digital processing of the signal after digitization, the controls and computations, the power supply of the different circuits of the optical head (32) or (33) and the control and power supply of a cooler fitted to each detector.

## Patentansprüche

1. Optisches Standortsbestimmungs- und Meßsystem für Raumfahrzeuge, das eine Vorrichtung zur Entfernungsmessung umfaßt, die folgendes besitzt: einerseits einen opto-elektronischen Kopf (32), der eine exakt monochromatische Lichtimpulsquelle (40) und einen Detektor mit Optik (36) zur Bildabbildung und eine mit Lesevorrichtungen mit bestimmter Frequenz an einem Ausgang verbundene Matrix aus elektro-optischem Meßzellen (42) enthält und andererseits ein elektronisches Gehäuse (34), das Bearbeitungseinrichtungen für durch den Kopf eingespeiste Analogsignale und Schaltkreise zur Einspeisung von logischen Signalen zur periodischen Entkopplung der Quelle und zur Einspeisung von Synchronisationssignalen in den Kopf enthält, **dadurch gekennzeichnet**, daß es darüberhinaus mindestens einen weiteren Detektionskopf (33) mit einer zweidimensionalen Matrix aus elektro-optischen Meßzellen mit einem gegenüber dem ersten Kopf unterschiedlichen Aufbau enthält und daß das Gehäuse Schalteinrichtungen (76) enthält, die es ermöglichen, wahlweise und je nach Wunsch den Teil des elektronischen Gehäuses, der identische oder ähnliche Funktionen des einen Kopfes (32) und des anderen Kopfes (33) sicherstellt, mit einem der beiden Köpfe zu verbinden und Schaltkreise, die die für einen der beiden Köpfe spezifischen Funktionen sicherstellen, gleichzeitig ein- und auszuschalten.

2. System nach Anspruch 1, **dadurch gekennzeichnet, daß** der zweite Kopf passiv ist.

3. System nach Anspruch 1 oder 2, **dadurch gekennzeichnet**, **daß** die zwei Köpfe gemeinsame Teile enthalten.

4. System nach einem der Ansprüche 1 bis 3, **dadurch gekennzeichnet**, **daß** jeder Kopf eine elektronische Karte umfaßt, die zur vorverstärkung des durch den Detektor des Kopfes eingespeisten Videosignals und zur Aufnahme und Aufbereitung der für den Detektor bestimmten Taktimpulse geeignet ist.

5. System nach einem der Ansprüche 1 bis 4, **dadurch gekennzeichnet, daß** das Gehäuse Einrichtungen enthält, die von einem zum anderen Kopf direkt umschaltbar sind, und die analoge Bearbeitung des aus dem optischen Kopf (32) oder (33) stammenden Videosignals, die digitale Bearbeitung des Signals nach Digitalisierung, die Steuerungen und Berechnungen, die Stromversorgung der verschiedenen Schaltkreise des optischen Kopfes (32) oder (33) und die Steuerung und Stromversorgung eines Kühlers, mit dem jeder Detektor ausgestattet ist, sicherstellen.
